# EUROPEAN PATENT APPLICATION

(11) **EP 4 650 147 A1**
(43) Date of publication of application: **19.11.2025**
(21) Application number: 25176521.0
(22) Date of filing: 14.05.2025
(51) Int. Cl.: B29C 51/04, B29C 51/26, B29C 55/20, B29C 63/00, B29C 63/02, B29L 9/00, B29L 31/30

(54) **COATING APPARATUS**

(30) Priority: 17.05.2024 JP 2024081083
(71) Applicant: TAIKISHA LTD., Tokyo 160-6129 (JP)
(72) Inventor: HIGASHI, Yoshio, Tokyo, 1606129 (JP); TAKIZAWA, Yukiya, Tokyo, 1606129 (JP); WATANABE, Seidai, Tokyo, 1606129 (JP); KONGO, Koshu, Tokyo, 1606129 (JP); NISHIHARA, Shigeyoshi, Tokyo, 1606129 (JP); KUMON, Yoichi, Osaka, 5830841 (JP); OKAMOTO, Hitoshi, Osaka, 5830841 (JP)
(74) Representative: Mathys & Squire

(57) **Abstract**

A coating apparatus (4) including a displacement means (9) for displacing a first continuous structure (13) and a second continuous structure (14), and a work (W) to be coated, relative to each other, such that a film (F) is brought into contact with the work (W) to be coated by a plurality of first contact members (11) and a plurality of second contact members (12).

## Description

### BACKGROUND OF THE INVENTION

### Field of the Invention

The present invention relates to a coating apparatus.

### Description of the Related Art

Forming methods in which a three-dimensional work to be coated is coated with a film are known. For example, Japanese Patent Laid-Open No. 2021-62625 discloses a method of coating an automobile and the like with a film stretched into a flat shape.

### SUMMARY OF THE INVENTION

The present invention reduces variation in the amount of stretch in a film that depends on the part of a coated work.

The present invention in an aspect provides a coating apparatus as specified in claims 1 to 17.

According to the present invention, it is possible to reduce variation in the amount of stretch in a film that depends on the part of a coated work.

### BRIEF DESCRIPTION OF THE DRAWINGS

FIG. 1 is a schematic view of a coating system.
FIG. 2 is a view illustrating an internal configuration of a coating apparatus.
FIG. 3 is a view illustrating an internal configuration of the coating apparatus.
FIG. 4 is a cross-sectional view of a part of the coating apparatus.
FIG. 5 is a magnified view of a part of the coating apparatus.
FIG. 6 is a magnified view of a part of the coating apparatus.
FIG. 7 is view for describing operation of the coating apparatus.
FIG. 8 is view for describing operation of the coating apparatus.
FIG. 9 is view for describing operation of the coating apparatus.
FIG. 10 is view for describing operation of the coating apparatus.
FIG. 11 is view for describing operation of the coating apparatus.
FIG. 12 is view for describing operation of the coating apparatus.
FIG. 13 is view for describing operation of the coating apparatus.
FIG. 14 is view for describing operation of the coating apparatus.
FIG. 15 is view for describing operation of the coating apparatus.
FIG. 16 is a view illustrating an internal configuration of the coating apparatus.
FIG. 17 is a view illustrating an internal configuration of the coating apparatus.
FIG. 18 is a view illustrating an internal configuration of the coating apparatus.

### DESCRIPTION OF THE EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

When coating a three-dimensional work to be coated while a film is stretched into a flat shape, the amount of stretch in the film varies depending on the part of the coated work due to a difference in the distance between the work to be coated and the film, which causes wrinkles.

According to the present invention, it is possible to reduce variation in the amount of stretch in the film that depends on the part of the coated work.

### <First Embodiment>

### <Configuration of Coating System>

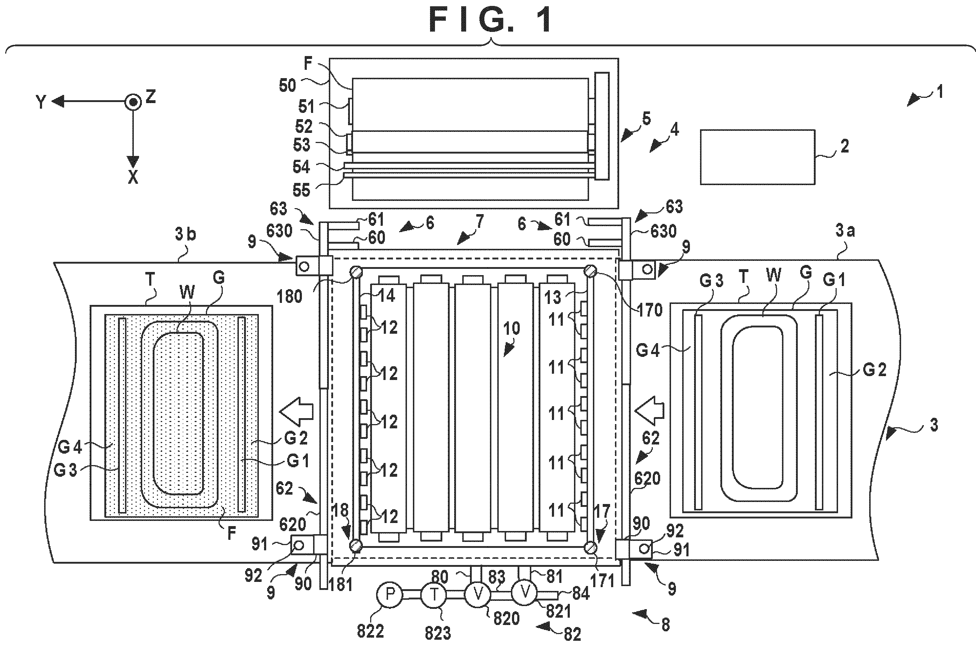

FIG. 1 is a schematic view illustrating a part of a configuration of a coating system 1 to which a coating apparatus according to the present invention can be applied. In each figure, arrows X and Y indicate horizontal directions that are orthogonal to each other, and arrow Z indicates a vertical direction (height direction of the coating apparatus).

The coating system 1 is a decoration system that decorates a work W to be coated by coating the work W to be coated with a film F. The coating system 1 includes a control apparatus 2, a conveyance apparatus 3 and a coating apparatus 4.

The control apparatus 2 is an electronic circuit that controls the entire coating system 1. The control apparatus 2 includes, for example, a processing unit, a storage unit, an input/output (I/O) interface, a display unit, and an input unit. The processing unit is a processor typified by a CPU and controls the coating system 1 by executing a program stored in the storage unit. The storage unit is a storage device, such as a ROM, a RAM, and an HDD, and stores various kinds of control information in addition to programs to be executed by the processing unit. The I/O interface is an interface (actuator, such as a motor, or sensor) that transmits and receives signals between the processing unit and an external device. The display unit is a display that displays information to a user. The input unit is a key switch for the user to input an instruction. The display unit and the input unit may be constituted by a touch panel.

The conveyance apparatus 3 conveys the work W to be coated into and out of the coating apparatus 4. Arrows in the drawing indicate the direction of conveyance of the work W to be coated. In case of the present embodiment, the conveyance apparatus 3 is a roller conveyor that includes a plurality of rollers. The work W to be coated is conveyed by the conveyance apparatus 3 into the coating apparatus 4 from an upstream conveyance path 3a while being held by a jig G, which has been placed on a conveyance table T, such as a pallet. Then, after being coated with a film in the chamber of the coating apparatus 4, the coated work W is conveyed out from a downstream conveyance path 3b. Note that the conveyance apparatus 3 may further include, for example, a conveyance position adjustment unit that adjusts the conveyance position of the conveyance table T, and the like. Further, the conveyance apparatus 3 may be any kind of conveyor other than a roller conveyor, such as a belt conveyor, or may be a multi-joint robot.

The coating apparatus 4 is an apparatus that coats the work W to be coated with the film F. The coating apparatus 4 is, for example, a vacuum forming apparatus that improves adhesion of the film F to the coated work W by using an air pressure difference. The coating apparatus 4 will be described later in detail.

In the present embodiment, description will be given assuming that the work W to be coated is a member, such as a front bumper or a rear bumper of a vehicle (e.g., a four-wheeled vehicle), but the work W to be coated is not limited thereto, and the present invention can be applied to various objects.

In the present embodiment, the film F is, for example, a stretchable material, specifically, a film F in which thermoplastic resin is used, and has, for example, a multilayer structure that includes a decorative layer with colors/patterns, which decorate the work W to be coated, on its surface layer and an adhesive layer on its lowermost layer. By coating the work W to be coated in such a film F, for example, a member of a vehicle can be decorated according to the vehicle color.

The coating system 1 is not limited to the above configuration and may include, for example, a robot apparatus that replaces the work W to be coated and the jig G, a dust removal apparatus that removes contamination from the work W to be coated, and the like. Further, the coating system 1 may include a light irradiation unit that irradiates the work W to be coated and the film F with light such as ultraviolet rays, a drying unit that dries the work W to be coated and the film F, and the like. Further, the coating system 1 may include, for example, a trimming unit that partially removes unnecessary film F after the work W to be coated is coated with the film F.

### <Coating Apparatus>

Next, the coating apparatus 4 will be described in detail. As illustrated in FIG. 1, the coating apparatus 4 includes a film supply unit 5, a film moving unit 6, a chamber 7, and an air pressure adjustment unit 8. The coating apparatus 4 moves the film F, which is supplied from the film supply unit 5, into the chamber 7 by using the film moving unit 6. A dashed-line portion of the chamber 7 illustrated in FIG. 1 indicates the interior of the chamber 7. The coating apparatus 4 coats the work W to be coated with the film F in the chamber 7. During the coating operation, the air pressure in the chamber 7 is adjusted by the air pressure adjustment unit 8.

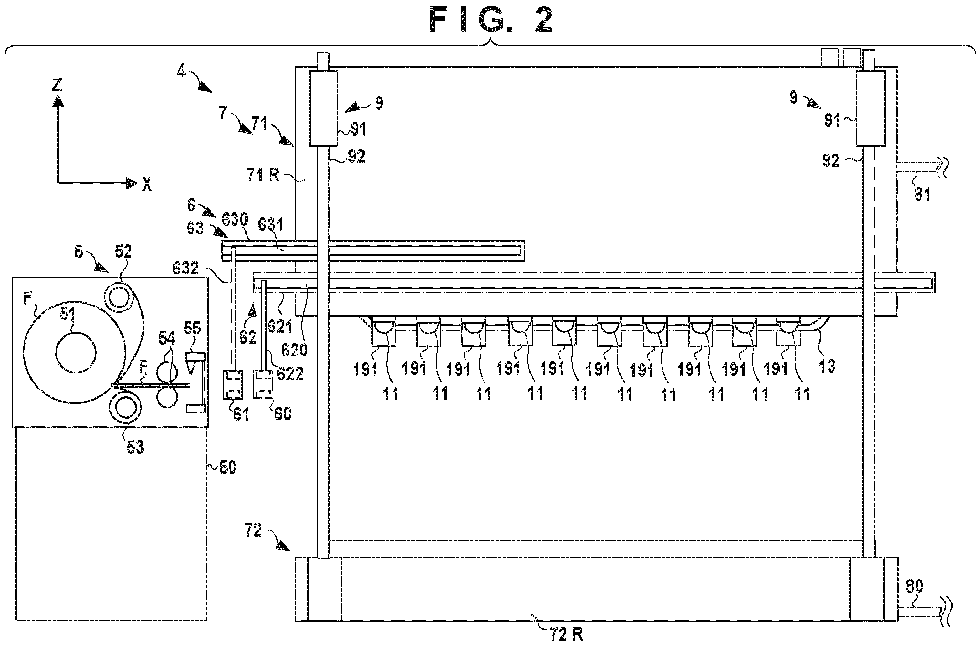

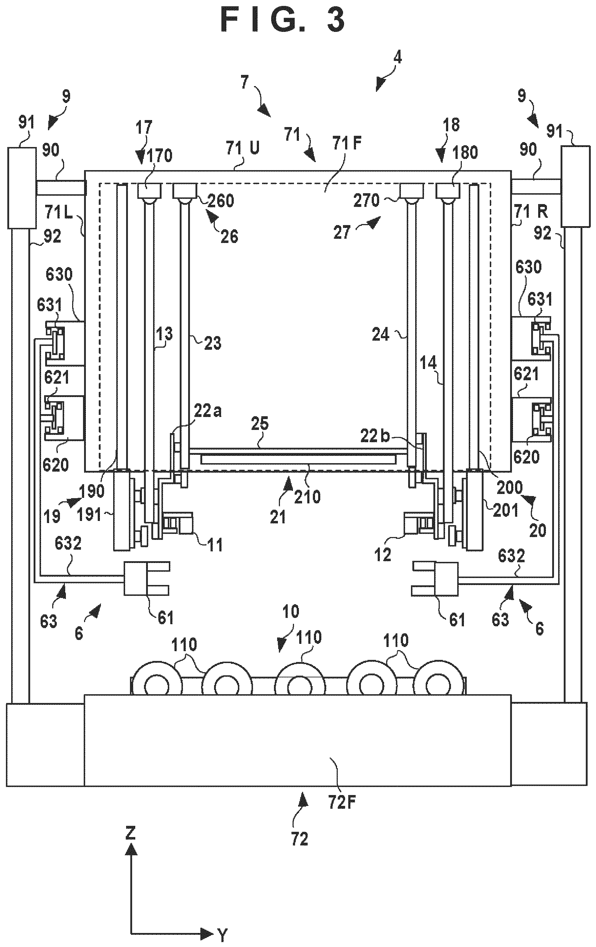

Each component of the coating apparatus 4 will be described below with reference to FIGS. 2 and 3 in addition to FIG. 1. FIGS. 2 and 3 are views illustrating an internal configuration of the coating apparatus 4. FIG. 2 is a view of the coating apparatus 4 seen from a downstream side of the conveyance path of FIG. 1. FIG. 3 corresponds to a view of the chamber 7 of the coating apparatus 4 seen from the film supply unit 5 side. Note that a dashed-line portion of the chamber 7 illustrated in FIG. 3 indicates a part of the interior of the chamber 7. In the following description, for convenience, the conveyance direction of the film F may be referred to as the X direction, the conveyance direction of a work W to be coated as the Y direction, and the height direction (vertical direction) of the coating apparatus 4 as the Z direction.

As illustrated in FIGS. 1 and 2, the film supply unit 5 supports the film F for coating the work W to be coated. The film supply unit 5 includes a support base 50, a support roller 51, a winding roller 52, a winding roller 53, guide rollers 54, a cutting device 55, and the like. The support roller 51, which is provided on the support base 50, is a roller that rotatably supports the film F, which is wound into a roll. The winding roller 52 and the winding roller 53 are, for example, rollers for winding release films (protective films) and the like when the front and back surfaces of the film F for coating a work W to be coated are laminated with release films. The guide rollers 54 are a pair of rollers that pull out the film F, which is supported by the support roller 51, in a flat shape. The cutting device 55 is a device that cuts the film F. In the present embodiment, the cutting device 55 includes a cutter. Note that the cutting device 55 may be, for example, a device that cuts the film F by irradiating it with a laser beam.

The film moving unit 6 performs a conveyance operation of conveying the film F above the work W to be coated that has been conveyed into the chamber 7. Further, the film moving unit 6 moves the film F during a coating operation, in which the work W to be coated is coated with the film F. As illustrated in FIGS. 2 and 3, the film moving unit 6 is provided on an upper chamber member 71, which will be described later, and is raised/lowered in the Z direction together with the upper chamber member 71. As illustrated in FIGS. 1 to 3, the film moving unit 6 includes a leading end gripping unit 60, a trailing end gripping unit 61, a first moving mechanism 62, and a second moving mechanism 63.

The leading end gripping unit 60 grips the leading end of the film F. The leading end of the film F is a portion at an end that has been pulled out in a direction orthogonal to an axial direction of the film F, which is wound into a roll. The leading end gripping unit 60 grips both end portions of the film F in the Y direction at the leading end of the film F. Note that the leading end gripping unit 60 may grip the entire width direction of the film F at the leading end of the film F. Further, the leading end gripping unit 60 can switch between a gripping state in which the leading end of the film F is gripped and a release state in which the leading end of the film F is not gripped but released. Further, the leading end gripping unit 60 is supported by the first moving mechanism 62 through support members 622 that movably support the leading end gripping unit 60.

The trailing end gripping unit 61 grips the trailing end of the film F such that the film F covers the work W to be coated. As will be described later, the leading end gripping unit 60 is moved by the first moving mechanism 62 while gripping the leading end of the film F so as to cover the work W to be coated. Then, the trailing end gripping unit 61 grips the trailing end of the film F. The trailing end gripping unit 61 grips both end portions of the film F in the Y direction at the trailing end of the film F. Note that the trailing end gripping unit 61 may grip the entire width direction of the film F at the trailing end of the film F. Further, the trailing end gripping unit 61 can switch between a gripping state in which the trailing end that has been pulled out in a direction orthogonal to the axial direction of the rolled film F is gripped and a release state in which the trailing end of the film F is not gripped but released. Further, the trailing end gripping unit 61 is supported by the second moving mechanism 63 through support members 632 that movably support the trailing end gripping unit 61.

The first moving mechanism 62 is capable of moving the leading end gripping unit 60 in the X direction in which the film F is conveyed above the work W to be coated and in a direction opposite to the X direction. More specifically, the first moving mechanism 62 includes rails 620, which are capable of moving the leading end gripping unit 60 in the X direction and in the direction opposite to the X direction. That is, the first moving mechanism 62 can be said to include guide members that guide the movement of the leading end gripping unit 60 in the X direction in which the film F is conveyed above the work W to be coated and in the direction opposite to the X direction.

As illustrated in FIGS. 1 and 3, a rail 620 is provided on each side wall portions 71R and 71L outside the upper chamber member 71 of the chamber 7. Further, as illustrated in FIGS. 1 and 2, the rails 620 are provided along the X direction of the chamber 7 and so as to protrude from the upper chamber member 71. That is, the rails 620 are longer than the upper chamber member 71 in the X direction. With this, as will be described later, when the upper chamber member 71 is lowered and comes into contact with a lower chamber member 72, the leading end gripping unit 60 can be moved out of the chamber 7.

As illustrated in FIGS. 2 and 3, the first moving mechanism 62 includes first control mechanisms 621 in the rails 620. A first control mechanism 621 may be, for example, an electric actuator, an electric cylinder, an electric ball screw mechanism, and the like. By the first control mechanisms 621 controlling to move the support members 622, which support the leading end gripping unit 60, the leading end gripping unit 60 can move in the X direction and in the direction opposite to the X direction.

The second moving mechanism 63 can move the trailing end gripping unit 61 in the X direction and in the direction opposite to the X direction. The second moving mechanism 63 includes rails 630, which are capable of moving the trailing end gripping unit 61 in the X direction and in the direction opposite to the X direction. That is, the second moving mechanism 63 can be said to include guide members that guide the movement of the trailing end gripping unit 61 in the X direction and in the direction opposite to the X direction.

As illustrated in FIGS. 1 and 3, a rail 630 is provided on each side wall portions 71R and 71L outside the upper chamber member 71 of the chamber 7. Further, as illustrated in FIGS. 1 and 2, the rails 630 are provided along the X direction and so as to protrude from the upper chamber member 71 toward the film supply unit 5 side (film F supply source side). With this, as will be described later, when the upper chamber member 71 is lowered and comes into contact with the lower chamber member 72, the trailing end gripping unit 61 can be moved out of the chamber 7.

As illustrated in FIG. 3, the second moving mechanism 63 includes second control mechanisms 631, which control the movement of the trailing end gripping unit 61, in the rails 630. A second control mechanism 631 may be a driving device, such as an electric actuator, an electric cylinder, and an electric ball screw mechanism, for example. By the second control mechanisms 631 controlling to move the support members 632, which support the trailing end gripping unit 61, the trailing end gripping unit 61 can be move in the X direction and in the direction opposite to the X direction.

As illustrated in FIGS. 2 and 3, the coating apparatus 4 includes the upper chamber member 71, which constitutes the chamber 7 defining a coating space in which the work W to be coated is to be placed, and the lower chamber member 72.

The upper chamber member 71 includes a front wall portion 71F, a rear wall portion 71B, the side wall portion 71R, the side wall portion 71L, and an upper wall portion 71U and is open on the lower side. The rails 620 are provided on the side wall portion 71R and the side wall portion 71L. Further, the rails 630 are provided on the side wall portion 71R and the side wall portion 71L. That is, the upper chamber member 71 is a member that movably supports the leading end gripping unit 60 and the trailing end gripping unit 61.

Further, the lower chamber member 72 is provided below the upper chamber member 71, and the work W to be coated is to be placed thereon. The lower chamber member 72 includes a front wall portion 72F, a rear wall portion 72B, a side wall portion 72R, a side wall portion 72L, and a lower wall portion 72D and is open on the upper side.

As illustrated in FIGS. 1 to 3, the coating apparatus 4 includes a displacement unit 9, which displaces the upper chamber member 71 and the lower chamber member 72 relative to each other. The displacement unit 9 includes, for example, support members 90, moving mechanisms 91, and rails 92. The support members 90 movably support the upper chamber member 71 in the vertical direction of the coating apparatus 4. The moving mechanisms 91 move the support members 90 in the vertical direction of the coating apparatus 4. That is, by raising/lowering the upper chamber member 71, the displacement unit 9 displaces a first continuous structure 13 and a second continuous structure 14, which will be described later, and the work W to be coated, relative to each other. A moving mechanism 91 may be a driving device, such as an electric actuator, an electric cylinder, an electric ball screw mechanism, for example. The rails 92 extend in the Z direction and are members that guide the movement of the moving mechanisms 91 in the Z direction. Further, by the displacement unit 9 lowering the upper chamber member 71 and bringing it into contact with the lower chamber member 72, the interior of the chamber 7 can be sealed. Note that, in the present embodiment, an example in which the displacement unit 9 raises/lowers the upper chamber member 71 relative to the lower chamber member 72 has been described, but the present invention is not limited thereto. For example, the displacement unit 9 may be in a form that raises/lowers the lower chamber member 72 relative to the upper chamber member 71.

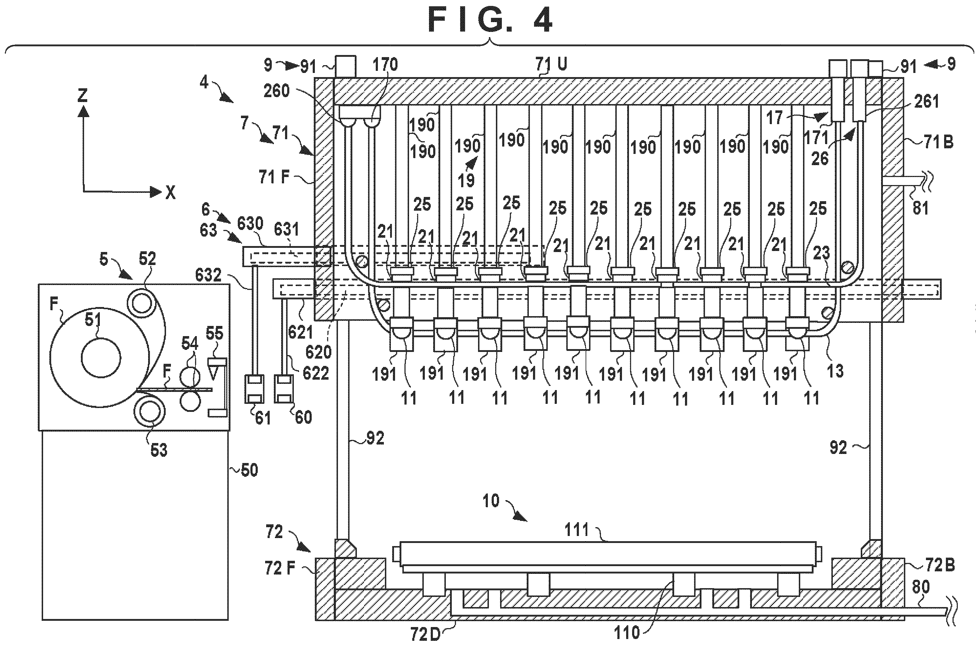

As illustrated in FIG. 1, the coating apparatus 4 includes a work moving unit 10 in the chamber 7. FIG. 4 will now be referred to in addition to FIGS. 1 to 3. FIG. 4 is a cross-sectional view of the chamber 7 for describing the interior of the chamber 7 and corresponds to a view illustrating the interior of the chamber 7 of FIG. 2.

The work moving unit 10 is provided in the lower chamber member 72. The work moving unit 10 includes a work elevating unit 110 and a work conveyance unit 111, which is supported by the work elevating unit 110. The work elevating unit 110 can raise/lower a work W to be coated that has been conveyed into the chamber 7 in the vertical direction of the coating apparatus 4 to adjust the position of the work W to be coated or bring the work W to be coated into contact with the film F. The work conveyance unit 111 conveys the work W to be coated by using a plurality of rotatable rollers. The work elevating unit 110 and the work conveyance unit 111 may be actuators, such as electric cylinders and electric ball screw mechanisms, for example.

As illustrated in FIG. 1, the coating apparatus 4 includes the air pressure adjustment unit 8, which adjusts the air pressure of the space in the chamber 7. The air pressure adjustment unit 8 includes a pipe 80 communicating with the interior of the lower chamber member 72, a pipe 81 communicating with the interior of the upper chamber member 71, a depressurizing unit 82, a valve 820, and a valve 821. In the present embodiment, the depressurizing unit 82 includes a pump 822 and a depressurizing tank 823, and the depressurizing tank 823 is depressurized by the pump 822. The depressurizing unit 82 may be constituted by the pump 822 alone. By providing the depressurizing tank 823, the interior of the chamber 7 can be depressurized in a relatively short time by the depressurizing tank 823 by using the pump 822 with a relatively low output. The pipe 80 communicates with the depressurizing tank 823, and the pipe 81 communicates with the depressurizing tank 823 via the valve 821, a pipe 83, and the valve 820.

The valve 820 switches the communication state between the pipe 80 and the depressurizing tank 823. The valve 821 switches the communication state between the pipe 81 and the pipe 83 and between the pipe 81 and a pipe 84. The pipe 84 is open to the atmosphere. The valve 821 can be switched between a state in which the pipe 81 is communicating with only the pipe 83 and a state in which the pipe 81 is communicating with only the pipe 84.

As illustrated in FIG. 1, the coating apparatus 4 includes a plurality of first contact members 11, a plurality of second contact members 12, the first continuous structure 13, and the second continuous structure 14 in the chamber 7.

The plurality of first contact members 11 are members that are arranged along a first side of the film F, which has been conveyed above the work W to be coated and come into contact with the first side. The plurality of second contact members 12 are members that are arranged along a second side of the film F that is opposite to the first side and come into contact with the second side. The plurality of first contact members 11 and the plurality of second contact members 12 are arranged at positions opposite to each other. Note that the number of the plurality of first contact members 11 and the number of the plurality of second contact members are not limited to the example illustrated in the drawings and may be changed as appropriate.

The first continuous structure 13 is a member that extends continuously in an extending direction along the first side of the film F, supports the plurality of first contact members 11, and can be deformed in a contact/separation direction in which the plurality of first contact members 11 come into contact with/separate from the film F.

The second continuous structure 14 is a member that extends continuously in an extending direction along the second side of the film F, supports the plurality of second contact members 12, and can be deformed in a contact/separation direction in which the plurality of second contact members 12 come into contact with/separate from the film F. The extending direction of the first continuous structure 13 and the extending direction of the second continuous structure 14 are the conveyance direction of the film F.

In the coating operation, the above displacement unit 9 displaces the first continuous structure 13 and the second continuous structure 14, and a work W to be coated, relative to each other, such that the plurality of first contact members 11 and the plurality of second contact members 12 bring the film F into contact with the work W to be coated.

In the coating operation, depending on the shape of the work W to be coated, for example, a contact interval between points at which the plurality of contact members are in contact with the film F may become too large. When the contact interval increases, the stretch in the film F increases, which causes wrinkles in the film F. However, in the present embodiment, the plurality of contact members 11 and 12 that come into contact with the film F are supported by the deformable continuous structures 13 and 14. With this, it is possible to prevent the contact interval from becoming too large in the coating operation. Therefore, it is possible to reduce variation in the amount of stretch in the film F that depends on the part of the coated work W when adhering the film F to the coated work W.

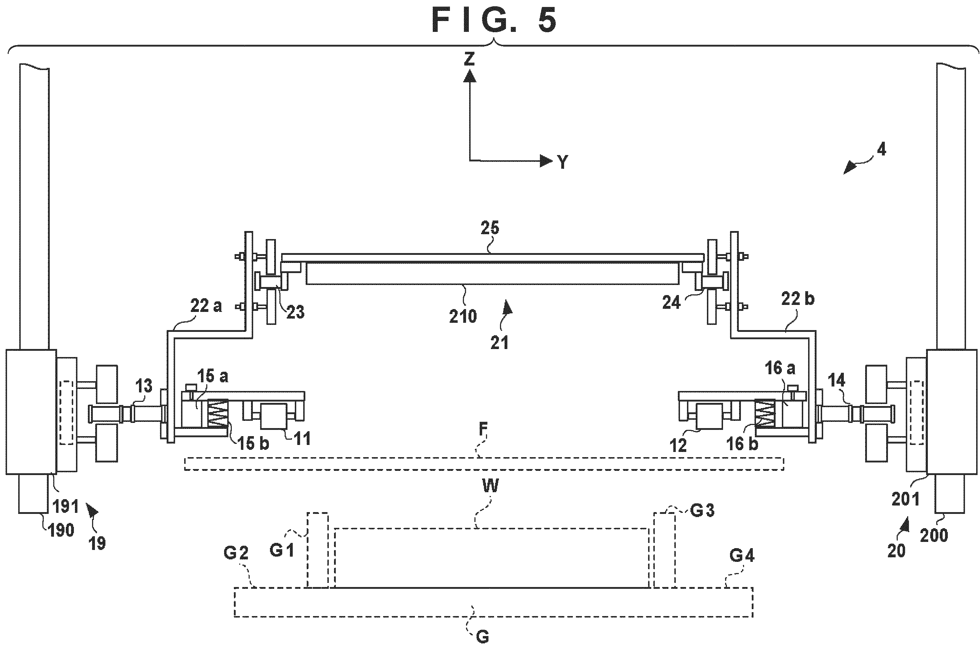

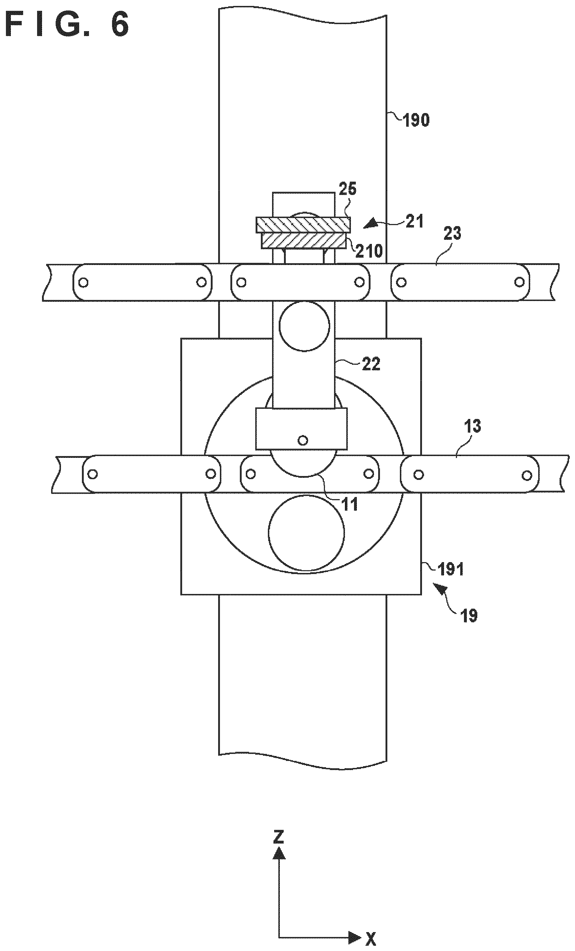

FIGS. 5 and 6 will now be referred to. FIG. 5 is a view for describing the interior of the chamber 7 and is a magnified view of a part of the interior of the chamber 7 seen in the X direction. Further, FIG. 6 is a view for describing the interior of the chamber 7 and is a magnified view of a part of the interior of the chamber 7 seen in the Y direction.

As illustrated in FIGS. 5 and 6, the first continuous structure 13 and the second continuous structure 14 are chains. The plurality of first contact members 11 are rotational members that are rotatably supported by the first continuous structure 13. The plurality of second contact members 12 are rotational members that are rotatably supported by the second continuous structure 14. A rotational member is, for example, a roller. By the members that come into contact with the film F being rotational members, it is possible to prevent the film F from getting rubbed when the plurality of first contact members 11 and the plurality of second contact members 12 come into contact with the film F.

As illustrated in FIG. 5, each of the plurality of first contact members 11 is provided on the first continuous structure 13 via a pressing member 15a and an elastic member 15b. Further, each of the plurality of second contact members 12 is provided on the second continuous structure 14 via a pressing member 16a and an elastic member 16b.

The pressing member 15a is, for example, a member that presses a first contact member 11 when the first contact member 11 comes into contact with the film F. Further, the pressing member 16a is, for example, a member that presses a second contact member 12 when the second contact member 12 comes into contact with the film F. The pressing member 15a and the pressing member 16a may be, for example, actuators. The elastic member 15b and the elastic member 16b may be, for example, springs. For example, some works W to be coated may include a concave curved portion. When the work W to be coated is coated with the film F, it may be difficult for each of the contact members 11 and 12 to come into contact with the film F at a concave curved portion of the work W to be coated. Meanwhile, by providing the pressing members 15a and 16a, it is possible to support the contact between each of the contact members 11 and 12 and the film F when each of the contact members 11 and 12 come into contact with the film F.

As illustrated in FIG. 1, the coating apparatus 4 includes a first suspension unit 17 and a second suspension unit 18 in the chamber 7.

As illustrated in FIG. 4, the first suspension unit 17 supports both ends of the first continuous structure 13 and suspends the first continuous structure 13. The first suspension unit 17 includes a first fixing member 170, which fixes one end of the first continuous structure 13 to the interior of the upper chamber member 71. The first suspension unit 17 further includes a first adjustment device 171, which adjusts the slack in the first continuous structure 13. The first adjustment device 171 is, for example, an electric cylinder.

In FIG. 4, the first suspension unit 17, which is on the first continuous structure 13 side, is illustrated, but the second suspension unit 18, which is on the second continuous structure 14 side, is similar (see FIGS. 1 and 3). That is, the second suspension unit 18 is provided in the upper chamber member 71. The second suspension unit 18 includes a second fixing member 180, which fixes one end of the second continuous structure 14 to the interior of the upper chamber member 71. The second suspension unit 18 further includes a second adjustment device 181, which adjusts the slack in the second continuous structure 14 (see FIG. 1). The second adjustment device 181 is, for example, an electric cylinder.

By the first adjustment device 171 being able to adjust the slack in the first continuous structure 13, the first continuous structure 13 can follow the shape of a work W to be coated. Further, by the second adjustment device 181 being able to adjust the slack in the second continuous structure 14, the second continuous structure 14 can follow the shape of a work W to be coated.

Note that the first adjustment device 171 and the second adjustment device 181 may be, for example, lifting mechanisms that are provided on the upper wall portion 71U of the upper chamber member 71 and can be raised/lowered in the vertical direction in the upper chamber member 71.

As illustrated in FIGS. 3 to 6, the coating apparatus 4 further includes a first regulation unit 19. The first regulation unit 19 regulates displacement of the first continuous structure 13 in a direction different from the contact/separation direction. The first regulation unit 19 includes a plurality of rails 190, which are arranged in a first extending direction and extending in a first contact/separation direction, and sliders 191, which are engaged with the rails 190 and the first continuous structure 13 and are capable of being displaced along the rails 190. Further, the first regulation unit 19 includes support members that deformably support the first continuous structure 13. The support members may be, for example, sprockets.

By restricting the displacement of the first continuous structure 13 in the direction different from the contact/separation direction by the first regulation unit 19, it is possible to prevent the positions of the first contact members 11 from being shifted from when the first contact members 11 first come into contact with the film F to when they finally come into full contact with the film F in the coating operation.

The coating apparatus 4 further includes a second regulation unit 20. The second regulation unit 20 regulates displacement of the second continuous structure 14 in a direction different from the contact/separation direction. The second regulation unit 20 includes a plurality of rails 200, which are arranged in a second extending direction and extending in a second contact/separation direction, and sliders 201, which are engaged with the rails 200 and the second continuous structure 14 and are capable of being displaced along the rails 200. Further, the second regulation unit 20 includes support members that deformably support the second continuous structure 14. The support members may be, for example, sprockets.

By restricting the displacement of the second continuous structure 14 in the direction different from the contact/separation direction by the second regulation unit 20, it is possible to prevent the positions of the second contact members 12 from being shifted from when the second contact members 12 first come into contact with the film F to when they finally come into full contact with the film F in the coating operation.

As illustrated in FIGS. 3 to 5, the coating apparatus 4 includes heating units 21, which heat the film F, which has been conveyed above the work W to be coated, in the space in the chamber 7. The heating units 21 generate heat by, for example, supply of electric power. By the heat of the heating units 21 softening the film F, the adhesion of the film F to a coated work W can be improved.

The heating units 21 are heaters 210, which are provided so as to correspond to the plurality of respective first contact members 11. The coating apparatus 4 includes connecting members 22a, which connect the heaters 210 with corresponding first contact members 11, respectively. A connecting member 22a is provided so as to connect a heating unit 21 and the first continuous structure 13. Further, the heating units 21 are heaters 210, which are provided so as to correspond to the plurality of respective second contact members 12. The coating apparatus 4 includes connecting members 22b, which connect the heaters 210 with corresponding second contact members 12, respectively. A connecting member 22b is provided so as to connect a heating unit 21 and the second continuous structure 14.

By the heaters 210 being connected with the corresponding respective contact members 11 and 12 by the connecting members 22a and 22b, it is possible to prevent distances between the heaters 210 and the respective contact members 11 and 12 from increasing when bringing the film F into contact with the work W to be coated. With this, the amount of heating of the film F does not greatly vary depending on the part of the work W to be coated, and it is possible to reduce variation in the amount of stretch in the film F.

As illustrated in FIGS. 3 to 5, the coating apparatus 4 includes a third continuous structure 23 and a fourth continuous structure 24. As described above, the plurality of first contact members 11 and the plurality of second contact members 12 are arranged at positions opposite to each other. The coating apparatus 4 includes bridge members 25, which connect the plurality of first contact members 11 and the plurality of second contact members 12. A heating unit 21 is provided for each combination of a first contact member 11 and a second contact member 12 and is provided on a bridge member 25. That is, the heating units 21 are supported by the third continuous structure 23, and the fourth continuous structure 24.

The third continuous structure 23 extends continuously in the first extending direction along the first side of the film F. The third continuous structure 23 is, for example, a chain. The third continuous structure 23 is suspended by a third suspension unit 26, which is provided on the upper wall of the upper chamber member 71. The third suspension unit 26 is a unit that supports both ends of the third continuous structure 23 and suspends the third continuous structure 23. The third suspension unit 26 includes a third fixing member 260, which fixes one end of the third continuous structure 23, and a third adjustment device 261, which adjusts the slack in the third continuous structure 23. The third adjustment device 261 is, for example, an electric cylinder.

As described above, the heating units 21 are connected to the corresponding first contact members 11 by the connecting members 22a. That is, the third continuous structure 23 is connected to the first continuous structure 13 via the connecting members 22a. With this, the third continuous structure 23 deforms in synchronization with the first continuous structure 13.

The fourth continuous structure 24 extends continuously in the second extending direction along the second side of the film F. The fourth continuous structure 24 is, for example, a chain. The fourth continuous structure 24 is suspended by a fourth suspension unit 27, which is provided on the upper wall of the upper chamber member 71. The fourth suspension unit 27 is a unit that supports both ends of the fourth continuous structure 24 and suspends the fourth continuous structure 24. The fourth suspension unit 27 includes a fourth fixing member 270, which fixes one end of the fourth continuous structure 24, and a fourth adjustment device 271, which adjusts the slack in the fourth continuous structure 24. The fourth adjustment device 271 is, for example, an electric cylinder.

As described above, the heating units 21 are connected to the corresponding second contact members 12 by the connecting members 22b. That is, the fourth continuous structure 24 is connected to the second continuous structure 14 via the connecting members 22b. With this, the fourth continuous structure 24 deforms in synchronization with the second continuous structure 14.

### <Example of Operation>

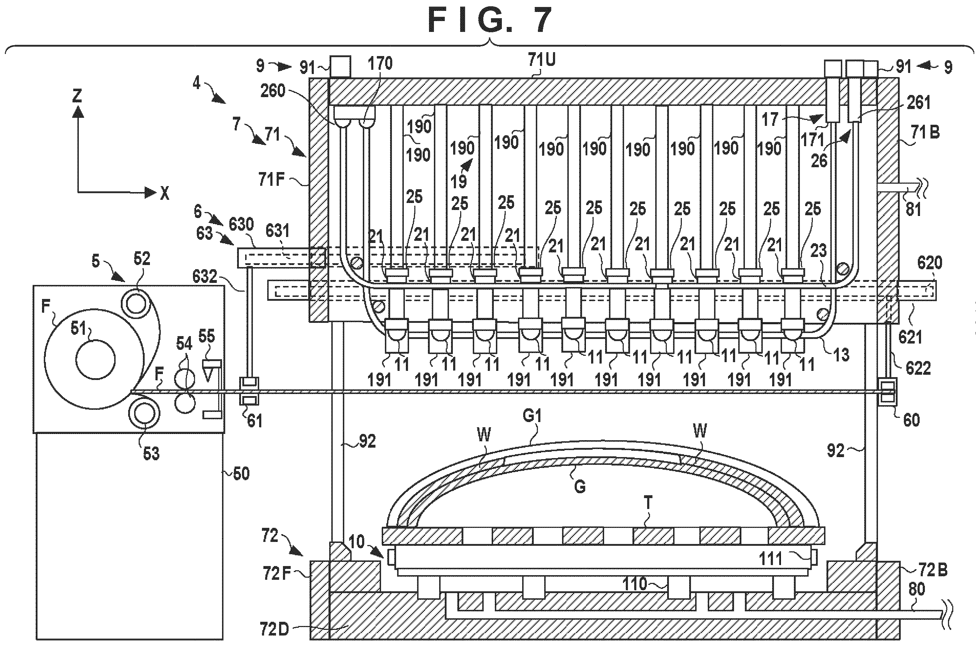

An example of operation of the coating system 1 will be described with reference to FIGS. 7 to 15. FIGS. 7 to 15 are views for describing the operation of the coating apparatus 4 and illustrate an example of operation from conveyance of the film F and the work W to be coated to coating of the work W to be coated with the film F and conveyance of the coated work W, which has been coated with the film F.

### <Conveyance of Work to be Coated and Movement of Film>

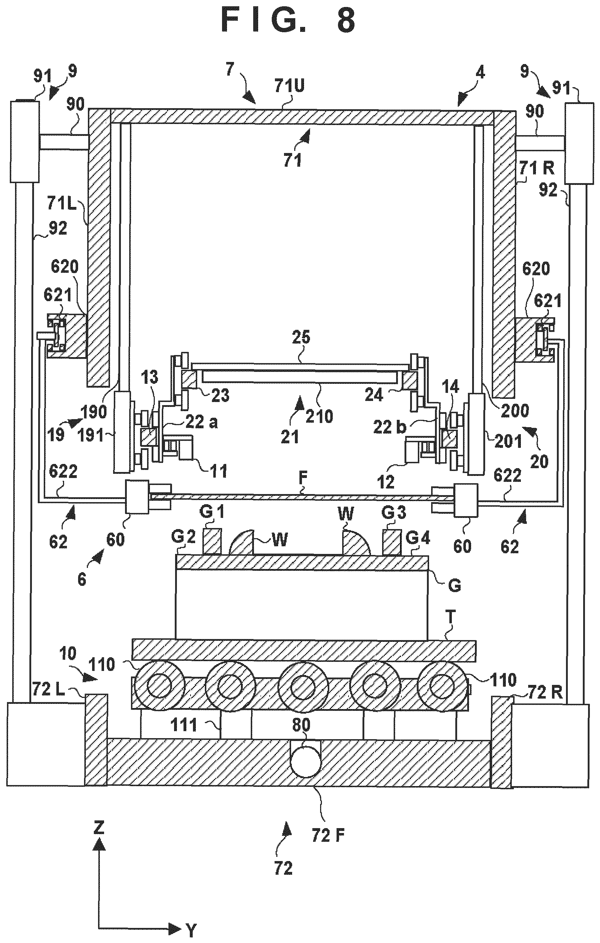

FIGS. 7 and 8 will be referred to. FIG. 7 illustrates a state in which the work W to be coated and the film F have been conveyed into the chamber 7. FIG. 8 illustrates the interior of the chamber 7 in the X direction of FIG. 7. As illustrated in FIGS. 7 and 8, the work W to be coated and the film F are conveyed into the chamber 7 in a state in which the upper chamber member 71 is raised by the displacement unit 9 and the upper chamber member 71 is separated from the lower chamber member 72.

The work W to be coated is conveyed by, for example, the above conveyance apparatus 3 and the like, onto the work moving unit 10, which is provided in the lower chamber member 72. The work moving unit 10 may adjust the position of the work W to be coated after the work W to be coated has been conveyed into the chamber 7. The film moving unit 6 conveys the film F above the work W to be coated. More specifically, the leading end gripping unit 60 grips the leading end of the film F, which has been supplied from the film supply unit 5. Then, the leading end gripping unit 60 is moved by the first moving mechanism 62 in the X direction so as to cover the work W to be coated. For example, the first control mechanisms 621 provided on the rails 620 may control the movement of the leading end gripping unit 60 based on the shape (size) of the work W to be coated.

### <Cutting of Film and Gripping of Film>

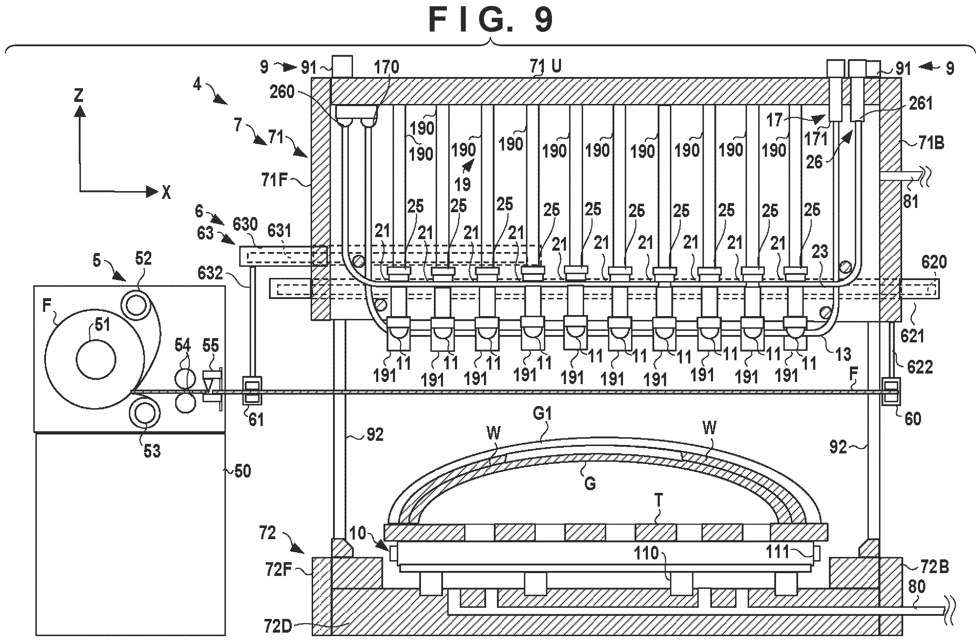

FIG. 9 will be referred to. FIG. 9 illustrates the interior of the chamber 7 in the X direction. FIG. 9 illustrates a state in which the trailing end gripping unit 61 grips the film F and the cutting device 55 cuts the film F. After the leading end gripping unit 60 has moved in the X direction so as to cover the work W to be coated with the film F, the trailing end gripping unit 61 grips the trailing end of the film F. Further, the cutting device 55 cuts the film F gripped by the leading end gripping unit 60 and the trailing end gripping unit 61 from the supply source of the film F (rolled film F). Thus, by the cutting device 55 cutting the film F from the supply source of the film F, it is possible to prevent the film F that is unnecessary for the coating from being pulled out. For example, the cutting device 55 may slide the cutter in the width direction of the film F to cut the film F. The width direction of the film F is the axial direction of the rolled film F. Further, the cutting device 55 may lower a wide cutter that is provided along the width direction of the film F and press the cutter in the thickness direction of the film F to cut the film F.

### <Film Conveyance Operation>

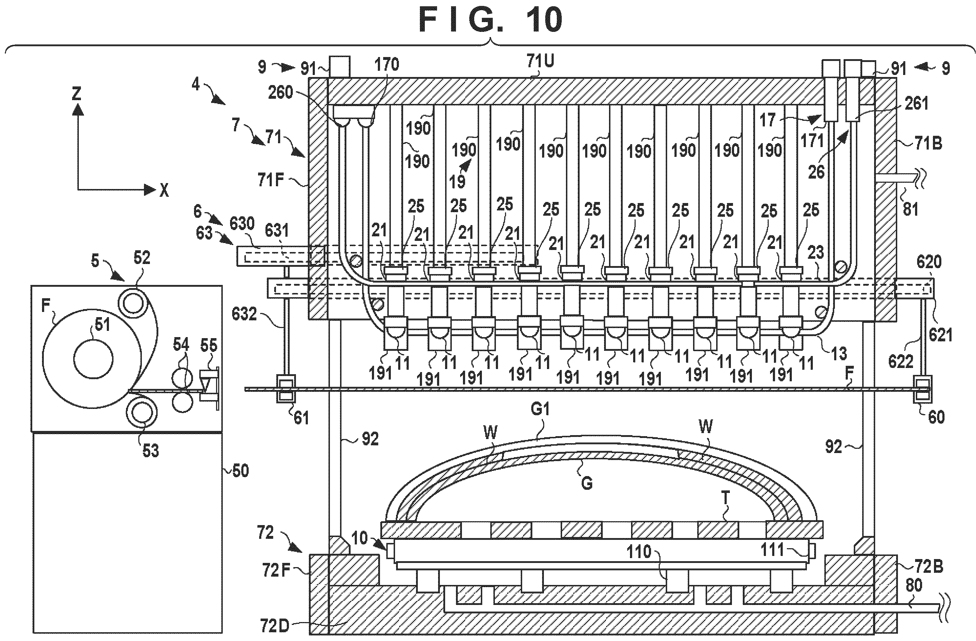

FIG. 10 will be referred to. FIG. 10 illustrates the interior of the chamber 7 in the X direction. FIG. 10 illustrates a state in which the film F gripped by the leading end gripping unit 60 and the trailing end gripping unit 61 is moved.

The leading end gripping unit 60 and the trailing end gripping unit 61 perform an operation of conveying the film F. The leading end gripping unit 60 is moved in the X direction by the first moving mechanism 62 while gripping the leading end of the film F. The trailing end gripping unit 61 is moved in the X direction by the second moving mechanism 63 while gripping the trailing end of the film F. The leading end gripping unit 60 and the trailing end gripping unit 61 move so as to apply tension to the film F in a conveyance operation of conveying the film F in the X direction. Note that a state in which tension is applied to the film F refers to a state in which tension is applied to such an extent that the film does not plastically deform or break. That is, the leading end gripping unit 60 and the trailing end gripping unit 61 convey the film F in a state in which the film F is spread in a flat shape. With this, it is possible to prevent the work W to be coated from being coated with the film F in a state in which there are wrinkles in the film F. For example, the first control mechanisms 621 may control the leading end gripping unit 60 to start movement in the X direction before the trailing end gripping unit 61. Further, for example, before the leading end gripping unit 60 and the trailing end gripping unit 61 perform the conveyance operation, the second control mechanisms 631 may control the trailing end gripping unit 61 to move in a direction opposite to the X direction and apply tension to the film F.

### <Contact Operation>

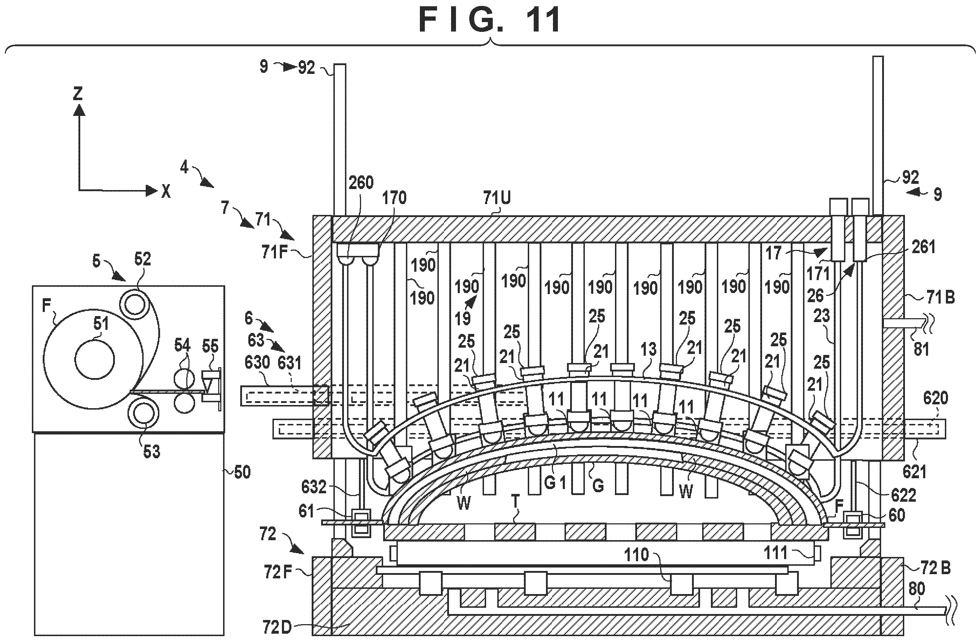

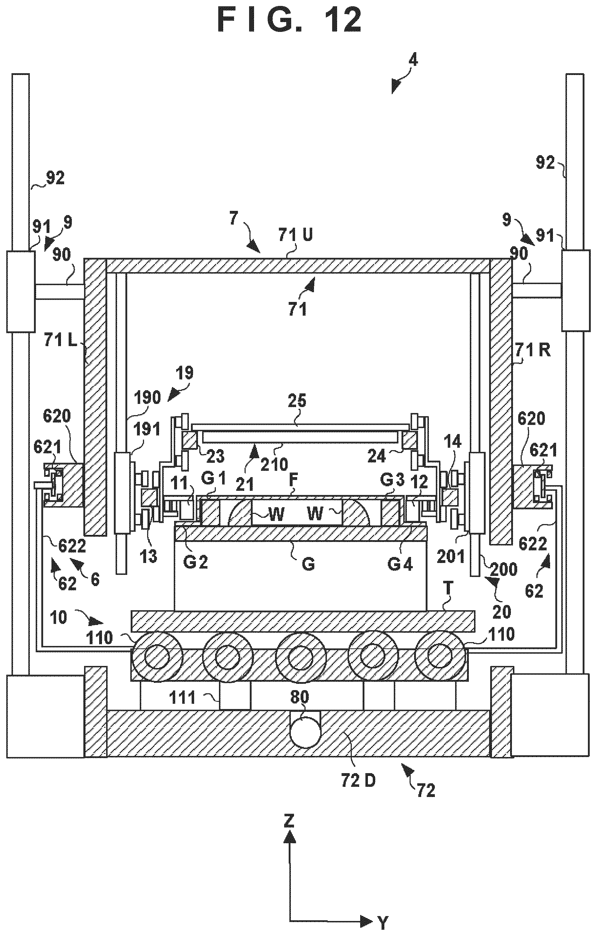

FIGS. 11 and 12 will be referred to. FIG. 11 illustrates a state in which the coating apparatus 4 brings the film F into contact with the work W to be coated. FIG. 12 illustrates the interior of the chamber 7 in the X direction of FIG. 11.

The displacement unit 9 displaces the upper chamber member 71 and the lower chamber member 72 relative to each other. More specifically, the displacement unit 9 lowers the upper chamber member 71 toward the lower chamber member 72. When the displacement unit 9 displaces the upper chamber member 71 and the lower chamber member 72 relative to each other, the plurality of first contact members 11 come into contact with the first side of the film F, and the plurality of second contact members 12 come into contact with the second side of the film F.

When the plurality of first contact members 11 come into contact with the film F, the first continuous structure 13 deforms in the first contact/separation direction in which the plurality of first contact members 11 come into contact with/separate from the film F. As illustrated in FIG. 11, the first continuous structure 13 can be deformed along the jig G, which includes a placement surface that follows the shape of the work W to be coated. FIG. 11 illustrates a configuration on the first continuous structure 13 side, but it is similar for a configuration on the second continuous structure 14 side. That is, when the plurality of second contact members 12 come into contact with the film F, the second continuous structure 14 deforms in the second contact/separation direction in which the plurality of second contact members 12 come into contact with/separate from the film F. The second continuous structure 14 can be deformed along the jig G, which includes the placement surface that follows the shape of the work W to be coated.

The plurality of first contact members 11 are supported by the first continuous structure 13, which can be deformed in the first contact/separation direction in which the plurality of first contact members 11 come into contact with/separate from the film F. With this, an interval between points at which the plurality of first contact members 11 are in contact with the film F can be made substantially uniform. Further, the plurality of second contact members 12 are supported by the second continuous structure 14, which can be deformed in the second contact/separation direction in which the plurality of second contact members 12 come into contact with/separate from the film F. With this, an interval between points at which the plurality of second contact members are in contact with the film F can be made substantially uniform. Therefore, it is possible to reduce variation in the amount of stretch in the film F that depends on the part of the coated work W.

Further, the first continuous structure 13 and the second continuous structure 14 can be deformed along the jig G, which includes the placement surface that follows the shape of the work W to be coated. With this, the plurality of first contact members 11 and the plurality of second contact members 12 can be brought into contact with the film F according to the shape of the work W to be coated.

Here, the displacement unit 9 can be said to displace the first continuous structure 13 and the second continuous structure 14, and the work W to be coated, relative to each other, such that the plurality of first contact members 11 and the plurality of second contact members 12 bring the film F into contact with the work W to be coated. Further, the displacement unit 9 can be said to displace the leading end gripping unit 60 and the work W to be coated relative to each other such that the film F comes into contact with the work W to be coated. Further, the displacement unit 9 can be said to displace the film F, which is gripped by the leading end gripping unit 60 and the trailing end gripping unit 61, and the work W to be coated relative to each other by raising/lowering the upper chamber member 71.

Further, as illustrated in FIG. 11, after the film F and the work W to be coated start to come into contact, before full contact is made, the leading end gripping unit 60 moves in the direction opposite to the X direction. That is, after the film F and the work W to be coated start to come into contact, the leading end gripping unit 60 moves in the direction opposite to the X direction by being guided by the guide members (rails 620). For example, when the film F and the work W to be coated start to come into contact, the first control mechanisms 621 may control the support members 622, which support the leading end gripping unit 60, to move in the direction opposite to the X direction. Alternatively, the first control mechanisms 621 may be configured to release control of the movement of the leading end gripping unit 60, such that a state in which the friction with the rails 620 is small is entered, and allow the leading end gripping unit 60 to be moved by the tension of the film F. That is, the leading end gripping unit 60 is not limited to a case where it is moved by the first control mechanisms 621 and may be in a form in which it is moved in the direction opposite to the X direction by the film F being deformed when the film F coats the work W to be coated. Thus, when the film F comes into contact with the work W to be coated, the leading end gripping unit 60 moves in the direction opposite to the X direction. With this, it is possible to prevent the film F from being stretched between the leading end of the film F and a portion where the film F comes into contact with the work W to be coated.

For example, a part of the film F coming into contact with the work W to be coated may be assumed as the start of contact. Further, the film F coating the entire work W to be coated after a part of the film F comes into contact with the work W to be coated may be assumed as full contact. More specifically, for example, the upper chamber member 71 being lowered by the displacement unit 9 to a first height with respect to the lower chamber member 72 may be assumed as the start of contact. Further, the upper chamber member 71 being lowered by the displacement unit 9 to a second height, which is lower than the first height, with respect to the lower chamber member 72 may be assumed as full contact. The first height and the second height may be values set in advance according to, for example, the size, shape, and the like of the work W to be coated.

Further, after the film F and the work W to be coated start to come into contact, before full contact is made, the trailing end gripping unit 61 moves in the X direction. For example, when the film F and the work W to be coated start to come into contact, the second control mechanisms 631 may control the support members 632, which support the trailing end gripping unit 61, to move in the X direction. Alternatively, the second control mechanisms 631 may be configured to release control of the movement of the trailing end gripping unit 61, such that a state in which the friction with the rails 630 is small is entered, and allow the trailing end gripping unit 61 to be moved by the tension of the film F. Thus, when the film F comes into contact with the work W to be coated, the trailing end gripping unit 61 moves in the X direction. With this, it is possible to prevent the film F from being stretched between the trailing end of the film F and a portion where the film F comes into contact with the work W to be coated. Therefore, it is possible to reduce variation in the amount of stretch in the film F that depends on the part of the coated work W.

Further, the leading end gripping unit 60 and the trailing end gripping unit 61 move so as to apply tension to the film F in a contact operation of bringing the film F into contact with the work W to be coated. For example, the leading end gripping unit 60 may move in the direction opposite to the X direction at a speed that does not interfere with the contact operation and is lower than a speed at which the displacement unit 9 lowers the upper chamber member 71, under the control of the first control mechanisms 621. Further, for example, the trailing end gripping unit 61 may move in the X direction at a speed that does not interfere with the contact operation and is lower than a speed at which the displacement unit 9 lowers the upper chamber member 71, under the control of the second control mechanisms 631. Thus, by the leading end gripping unit 60 and the trailing end gripping unit 61 moving so as to apply tension to the film F, it is possible to prevent wrinkles from occurring in the film F.

Further, as illustrated in FIGS. 11 and 12, in the present embodiment, the jig G includes a first protruding portion G1, which extends along the first side of the film F, and a first contact portion G2, which is on the side of the first protruding portion G1 that is opposite to the placement surface side with the work W to be coated and is lower in height than the first protruding portion G1. Further, the jig G includes a second protruding portion G3, which extends along the second side of the film F, and a second contact portion G4, which is on the side of the second protruding portion G3 that is opposite to the placement surface side with the work W to be coated and is lower in height than the second protruding portion G3. Then, as illustrated in FIG. 12, the plurality of first contact members 11 come into contact with the first contact portion G2 via the film F, and the plurality of second contact members 12 come into contact with the second contact portion G4 via the film F. By the plurality of first contact members 11 and the plurality of second contact members 12 coming into contact with such portions of the jig G, it is possible to increase the sealing of a sealed space, which is surrounded by the film F and the jig G on which the work W to be coated is placed. With this, it is possible to increase the adhesion of the film F to the work W to be coated when air pressure in the chamber 7 is adjusted by the air pressure adjustment unit 8, which will be described later.

### <Coating Operation>

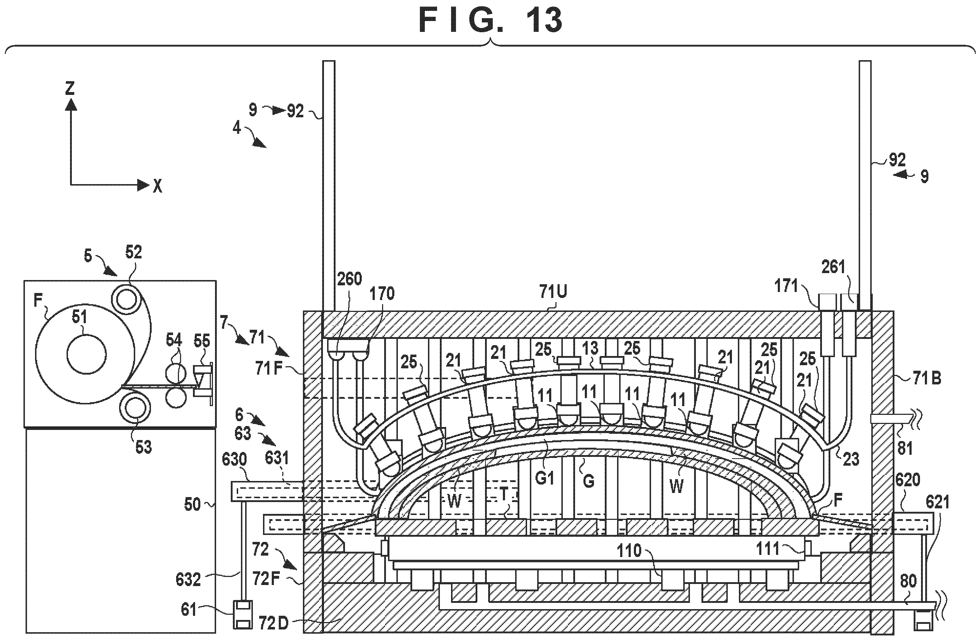

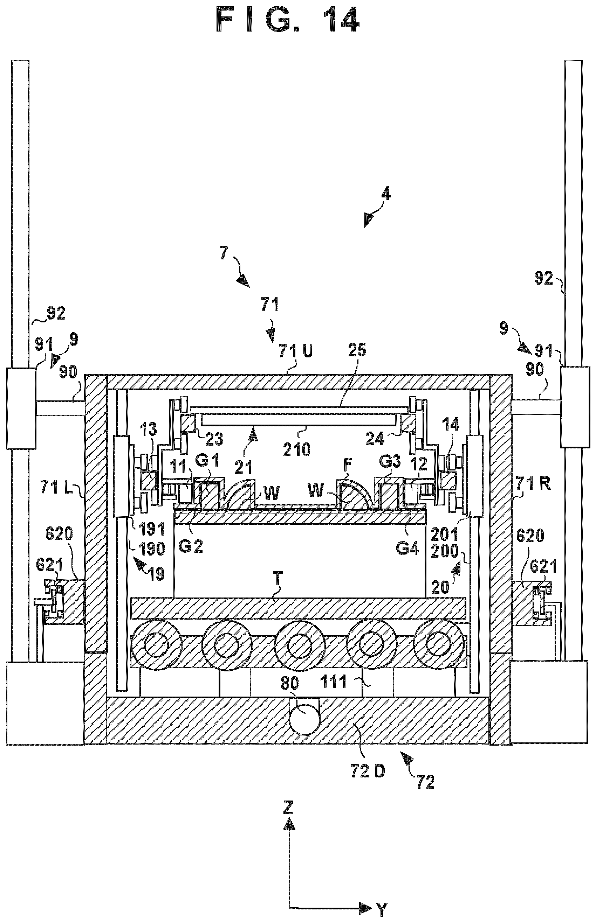

FIGS. 13 and 14 will be referred to. FIG. 13 illustrates a state in which the work W to be coated is coated with the film F. FIG. 14 illustrates the interior of the chamber 7 in the X direction of FIG. 13.

The first moving mechanism 62 is capable of moving the leading end gripping unit 60 outward of the upper chamber member 71 in the X direction due to the rails 620 protruding from the upper chamber member 71. After the plurality of first contact members 11 and the plurality of second contact members 12 come into full contact with the film F, the leading end gripping unit 60 releases the grip on the film F and moves in the X direction so as to be positioned outward of the upper chamber member 71. Further, the second moving mechanism 63 is capable of moving the trailing end gripping unit 61 outward of the upper chamber member 71 in the direction opposite to the X direction due to the rails 630 protruding on the film supply unit 5 side. After the plurality of first contact members 11 and the plurality of second contact members 12 come into full contact with the film F, the trailing end gripping unit 61 releases the grip on the film F and moves in the direction opposite to the X direction so as to be positioned outward of the upper chamber member 71. Then, after the leading end gripping unit 60 and the trailing end gripping unit 61 moves out of the upper chamber member 71, the displacement unit 9 lowers the upper chamber member 71 such that the upper chamber member 71 and the lower chamber member 72 come into contact.

Thus, after the plurality of first contact members 11 and the plurality of second contact members 12 come into full contact with the film F, the leading end gripping unit 60 and the trailing end gripping unit 61 release the grip on the film F. With this, it is possible to prevent the ends of the film F from being stretched when adhering the film F to the work W to be coated by the air pressure difference in the chamber 7. Further, by the leading end gripping unit 60 and the trailing end gripping unit 61 moving out of the upper chamber member 71, when the upper chamber member 71 and the lower chamber member 72 are brought into contact, it is possible to prevent the leading end gripping unit 60 and the trailing end gripping unit 61 from coming into contact with the lower chamber member 72.

When the upper chamber member 71 and the lower chamber member 72 come into contact and a state in which the interior of the chamber 7 is sealed is entered, the air pressure adjustment unit 8 adjusts the air pressure in the chamber 7. More specifically, the air pressure adjustment unit 8 adjusts, in the space (coating space) surrounded by the upper chamber member 71 and the lower chamber member 72, the air pressure between the sealed space, which is surrounded by the film F and the jig G on which the work W to be coated is placed, and an outer space, which is outside the sealed space. The air pressure adjustment unit 8, for example, depressurizes the space in the chamber 7. Here, after the valve 821 is switched to a state in which the pipe 81 and the pipe 83 communicate, the valve 820 is switched to a state in which the pipe 83 and the depressurizing tank 823 communicate. The air in the space in the chamber 7 is exhausted from the pipes 81 and 83, and both the sealed space and the outer space are depressurized (see FIG. 1). Further, after the chamber 7 enters a closed state, the heating units 21 are heated to heat the film F. The film F is softened and enters a state in which it is easily stretched.

Next, the valve 821 is switched to a state in which the pipe 81 and the pipe 84 communicate. In the space (coating space) in the chamber 7, the outer space, which is above the film F is opened to the atmosphere via the pipe 84, and an air pressure difference is generated between the sealed space and the outer space. The film F is suctioned to the sealed space side by the air pressure difference. The adhesion of the film F to the work W to be coated is increased, and the film F is stretched and adhered to the fine protruded/recessed shapes of the coated work W. That is, the work W to be coated is coated with the film F. As described above, in the present embodiment, since variation in the amount of stretch in the film F that depends on the part of the coated work W is reduced, unevenness in the amount of stretch in the film F that depends on the part is reduced also during the adhesion. Note that the air pressure adjustment unit 8 may be configured to further include a configuration, such as a compressor that pressurizes the outer space above the film F and, by pressurizing the outer space, increases the difference in air pressure between the outer space and the sealed space when the work W to be coated is coated with the film F.

### <Conveyance Operation>

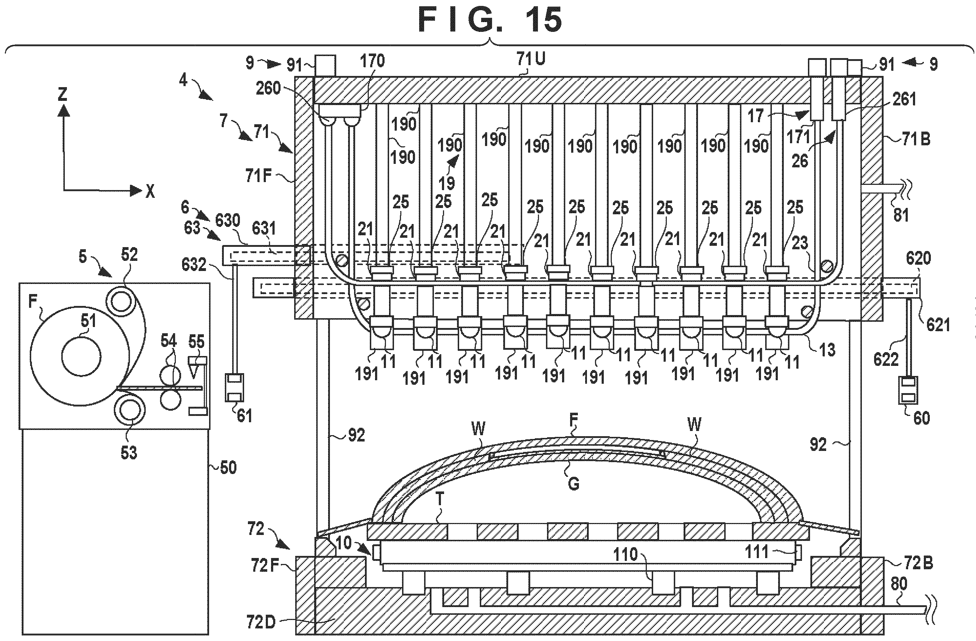

FIG. 15 will be referred to. FIG. 15 illustrates a state in which the coated work W coated with the film F is conveyed out. FIG. 15 is a cross-sectional view illustrating the interior of the chamber 7 in the X direction. After the work W to be coated is coated with the film F, the displacement unit 9 raises the upper chamber member 71. After the upper chamber member 71 is raised, the coated work W coated with the film F is conveyed out of the chamber 7 by the film moving unit 6. For example, when conveying out the work W to be coated, the film moving unit 6 may adjust the height of the conveyance table T so as to align it with the conveyance apparatus 3. With the above, the coating operation is completed. Then, excess portions of the film F coating the work W to be coated may be trimmed as necessary.

Thus, according to the present embodiment, the plurality of first contact members 11 are supported by the first continuous structure 13, and the plurality of second contact members 12 are supported by the second continuous structure 14. With this, variation in the amount of stretch in the film F that depends on the part of the coated work W is reduced. Therefore, it is possible to prevent occurrence of wrinkles.

### <Second Embodiment>

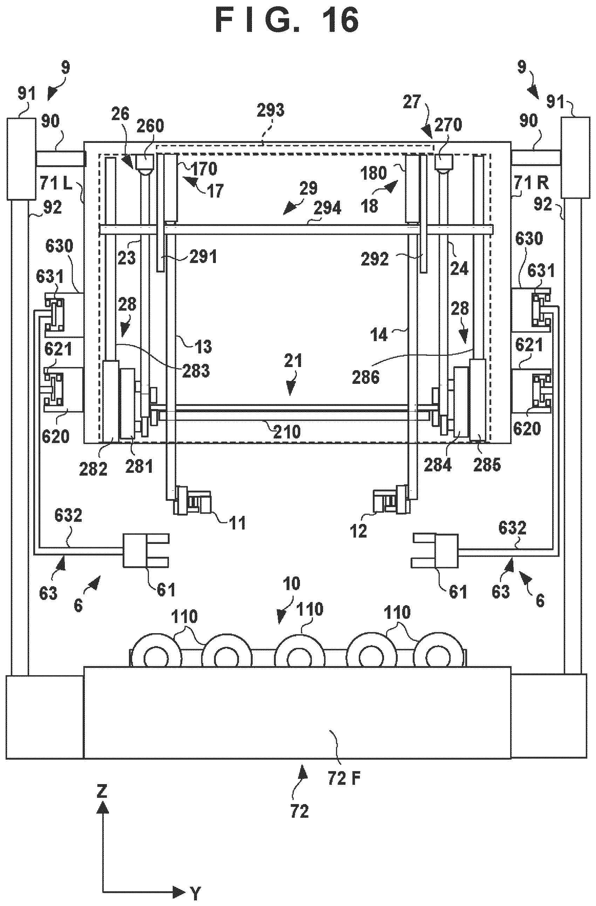

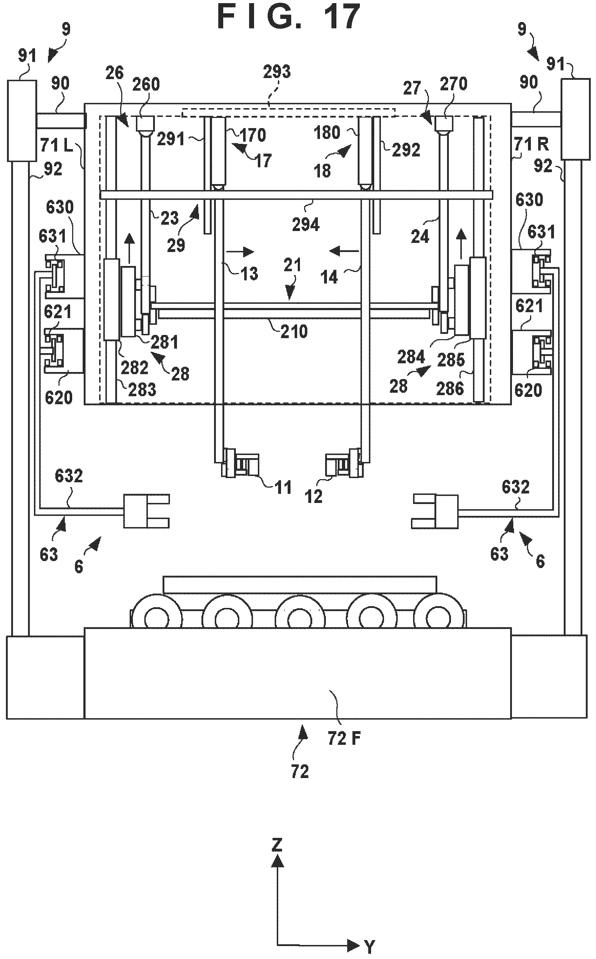

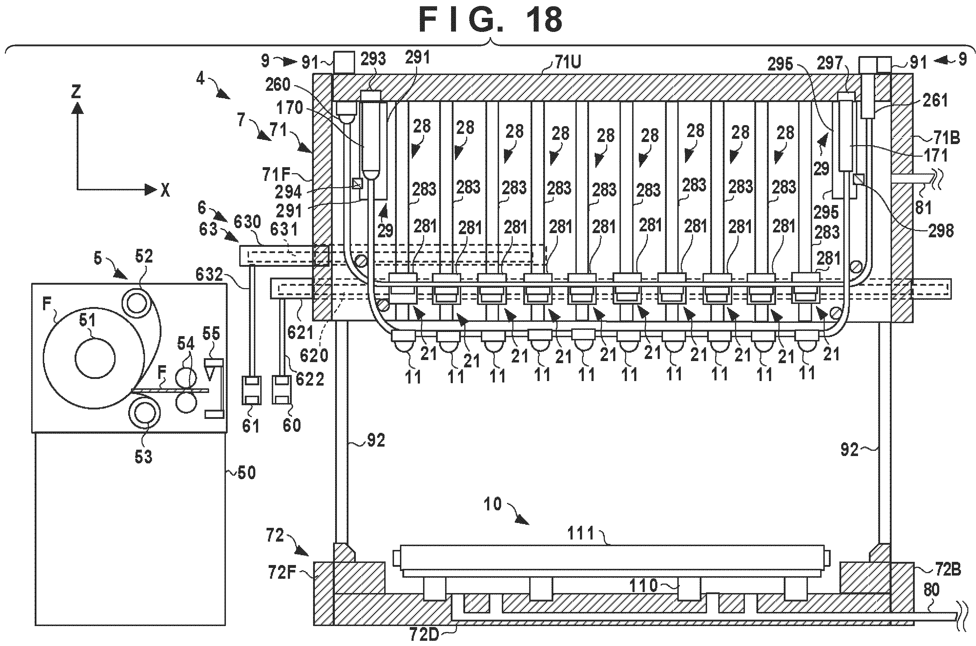

Another example of a configuration of the coating apparatus 4 will be described with reference to FIGS. 16 to 18. FIGS. 16 to 18 illustrate another internal configuration of the coating apparatus 4. FIGS. 16 and 17 correspond to views of the chamber 7 of the coating apparatus 4 seen from the film supply unit 5 side. FIG. 18 is a view of the coating apparatus 4 seen from a downstream side of the conveyance path of FIG. 1.

In the first embodiment, a configuration in which the third continuous structure 23 deforms in synchronization with the first continuous structure 13 via the connecting members 22a and the fourth continuous structure 24 deforms in synchronization with the second continuous structure 14 via the connecting members 22b has been described. In the present embodiment, a configuration is such that the third continuous structure 23 deforms independently of the first continuous structure 13 and the fourth continuous structure 24 deforms independently of the second continuous structure 14.

As illustrated in FIGS. 16 and 17, the coating apparatus 4 includes heater displacement units 28, which are provided in the upper chamber member 71. The heater displacement units 28 are provided independently of the displacement unit 9. The heater displacement units 28 support the third continuous structure 23 and the fourth continuous structure 24 so as to be capable of being raised and lowered. Further, in the present embodiment, the first continuous structure 13 and the third continuous structure 23 are not connected. Further, the second continuous structure 14 and the fourth continuous structure 24 are not connected. For example, when heating the film F, by the heater displacement units 28 raising/lowering the third continuous structure 23 and the fourth continuous structure 24, the third continuous structure 23 deforms independently of the first continuous structure 13 and the fourth continuous structure deforms independently of the second continuous structure 14. That is, the heater displacement units 28 can displace the heating units 21 supported by the third continuous structure 23 and the fourth continuous structure 24 relative to the work W to be coated. With this, it is possible to appropriately adjust the positions at which the heating units 21 heat the work W to be coated.

Further, as illustrated in FIG. 18, a plurality of heater displacement units 28 are provided in the first extending direction along the first side of the film F. Note that a plurality of heater displacement units 28 (not illustrated) are provided in the second extending direction along the second side of the film F.

As illustrated in FIGS. 16 and 17, for example, a heater displacement unit 28 includes a support member 281 which supports the third continuous structure 23, a moving mechanism 282 which moves the support member 281 in the vertical direction, and a rail 283, which guides the moving mechanism 282. Further, a heater displacement unit 28 includes a support member 284 which supports the fourth continuous structure 24, a moving mechanism 285 which moves the support member 284 in the vertical direction, and a rail 286 which guides the moving mechanism 285.

The support member 281 supports the third continuous structure 23 such that the third continuous structure 23 can be deformed. For example, the support member 281 may include a pair of rotational members and support the third continuous structure 23 between the pair of rotational members. The support member 284 supports the fourth continuous structure 24 such that the fourth continuous structure 24 can be deformed. Similarly, the support member 284 may include a pair of rotational members and support the fourth continuous structure 24 between the pair of rotational members. The rotational members may be, for example, rollers, sprockets, or the like rotatable about the Y direction.

The moving mechanisms 282 and the moving mechanisms 285 may be, for example, actuators, electric cylinders, electric ball screw mechanisms, and the like. For example, the moving mechanisms 282 and the moving mechanisms 285 are provided at positions opposite to each other. FIG. 17 illustrates a state in which the heater displacement units 28 move the third continuous structure 23 and the fourth continuous structure 24 in the upward direction in the upper chamber member 71. Further, the moving mechanisms 282 and the moving mechanisms 285 may move the support members 281 and the support members 284 in synchronization. Thus, by the heater displacement units 28 moving the third continuous structure 23 and the fourth continuous structure 24 in the vertical direction, the heating units 21 can be displaced relative to the work W to be coated.

Further, in the first embodiment, an example in which a distance of separation between the first continuous structure 13 and the second continuous structure 14 is fixed has been described, but a configuration in which the distance of separation between the first continuous structure 13 and the second continuous structure 14 can be changed may be taken.

As illustrated in FIGS. 16 to 18, the coating apparatus 4 includes a continuous structure moving unit 29, which is provided in the upper chamber member 71. For example, the continuous structure moving unit 29 moves at least one of the continuous structures such that the distance of separation between the first continuous structure 13 and the second continuous structure 14 changes. With this, it is possible to adjust the positions of the first continuous structure 13 and the second continuous structure 14 according to the size of the work W to be coated.

FIG. 17 illustrates, as an example, a state in which the continuous structure moving unit 29 moves the first continuous structure 13 in the Y direction and the second continuous structure 14 in a direction opposite to the Y direction. With such movement, the distance of separation between the first continuous structure 13 and the second continuous structure 14 decreases. Further, for example, the continuous structure moving unit 29 may move only the first continuous structure 13 in the Y direction or only the second continuous structure 14 in the direction opposite to the Y direction.

The continuous structure moving unit 29 includes, for example, a support member 291, which movably supports the first fixing member 170, and a support member 292, which movably supports the second fixing member 180. The support member 291 and the support member 292 are provided, for example, on a rail 293, which extends in the Y direction and is provided in the upper chamber member 71. For example, the rail 293 guides the support member 291 and the support member 292 in the Y direction and the direction opposite to the Y direction. Further, the continuous structure moving unit 29 includes, for example, a moving mechanism 294, which is capable of moving at least one of the support member 291 and the support member 292 in the Y direction and the direction opposite to the Y direction. The moving mechanism 294 may be, for example, an actuator, an electric cylinder, an electric ball screw mechanism, and the like.

As illustrated in FIG. 18, the continuous structure moving unit 29 includes, for example, a support member 295, which movably supports the first adjustment device 171. Further, the continuous structure moving unit 29 includes a support member (not illustrated), which movably supports the second adjustment device 181. The support member 295 and the support member (not illustrated) are provided, for example, on a rail 297, which extends in the Y direction and is provided in the upper chamber member 71. Further, the continuous structure moving unit 29 includes, for example, a moving mechanism 298, which is capable of moving at least one of the support member 295 and the support member (not illustrated) in the Y direction and the direction opposite to the Y direction. The moving mechanism 298 may be, for example, an actuator, an electric cylinder, an electric ball screw mechanism, and the like.

In this example, an example in which the moving mechanism 294 and the moving mechanism 298 are supported by respective side walls of the upper chamber member 71 has been illustrated but the present invention is not limited thereto. For example, a moving mechanism, such as an actuator, may be provided in the rail 293. Further, for example, a moving mechanism, such as an actuator, may be provided in the rail 297.

### <Other Embodiments>

In the above embodiments, an example in which the interior of the chamber 7 is opened to the atmosphere after being depressurized by the air pressure adjustment unit 8 to coat the work W to be coated with the film F and has been described. A method of coating the work W to be coated with the film F is not limited thereto. For example, the work W to be coated may be coated with the film F without the film F being heated. Alternatively, the work W to be coated may be coated with the film F without depressurizing the interior of the chamber 7. For example, the work W to be coated may be coated with the film F by pressurizing the film F with compressed air or the like from a surface of the film F on a side opposite to the surface on the work-W-to-be-coated side. Alternatively, the work W to be coated may be coated by the film F by pressing the film F with a mold or the like.

The invention is not limited to the foregoing embodiments, and various variations/changes are possible within the spirit of the invention.

## Claims

1. A coating apparatus (4) comprising:
a plurality of first contact members (11) arranged along a first side of a film (F) conveyed above a work (W) to be coated, and configured to come in contact with the first side;
a plurality of second contact members (12) arranged along a second side of the film (F) opposite to the first side, and configured to come in contact with the second side;
a first continuous structure (13) arranged to extend continuously in a first extending direction along the first side, and configured to support the plurality of first contact members (11) and be capable of deforming in a first contact/separation direction in which the plurality of first contact members (11) come into contact with/separate from the film (F);
a second continuous structure (14) arranged to extend continuously in a second extending direction along the second side, and configured to support the plurality of second contact members (12) and be capable of deforming in a second contact/separation direction in which the plurality of second contact members (12) come into contact with/separate from the film (F); and
a displacement means (9) for displacing the first continuous structure (13) and the second continuous structure (14), and the work (W) to be coated, relative to each other, such that the film (F) is brought into contact with the work (W) to be coated by the plurality of first contact members (11) and the plurality of second contact members (12).

2. The coating apparatus (4) according to claim 1,
wherein the plurality of first contact members (11) are rotational members rotatably supported by the first continuous structure (13), and
the plurality of second contact members (12) are rotational members rotatably supported by the second continuous structure (14).

3. The coating apparatus (4) according to claim 1 or claim 2,
wherein the first continuous structure (13) and the second continuous structure (14) are chains.

4. The coating apparatus (4) according to any one of claims 1 to 3,
wherein the first continuous structure (13) and the second continuous structure (14) are capable of being deformed along a jig (G) including a placement surface that follows a shape of the work (W) to be coated.

5. The coating apparatus (4) according to any one of claims 1 to 4, further comprising:
a first suspension means (17) for supporting both ends of the first continuous structure (13) and for suspending the first continuous structure (13); and
a second suspension means (18) for supporting both ends of the second continuous structure (14) and for suspending the second continuous structure (14).

6. The coating apparatus (4) according to claim 5,
wherein the first suspension means (17) further comprises:
a first adjustment means (171) for adjusting slack in the first continuous structure (13); and
the second suspension means (18) further comprises:
a second adjustment means (181) for adjusting slack in the second continuous structure (14).

7. The coating apparatus (4) according to any one of claims 1 to 6, further comprising:
a first regulation means (19) for regulating displacement of the first continuous structure (13) in a direction different from the first contact/separation direction; and
a second regulation means (20) for regulating displacement of the second continuous structure (14) in a direction different from the second contact/separation direction.

8. The coating apparatus (4) according to claim 7,
wherein the first regulation means (19) comprises:
a plurality of first rails (190) arranged in the first extending direction, each being arranged to extend in the first contact/separation direction, and first sliders (191), each being engaged with a respective first rail (190) and the first continuous structure (13) and capable of being displaced along the respective first rail (190), and
the second regulation means (20) comprises:
a plurality of second rails (200) arranged in the second extending direction, each being arranged to extend in the second contact/separation direction, and second sliders (201), each being engaged with a respective second rail (200) and the second continuous structure (14) and capable of being displaced along the respective second rail (200).

9. The coating apparatus (4) according to any one of claims 1 to 8, further comprising:
a conveyance means (6) for conveying the film (F) above the work (W) to be coated.

10. The coating apparatus (4) according to any one of claims 1 to 9, further comprising:
a first chamber member (71) and a second chamber member (72) constituting a chamber (7) defining a coating space in which the work (W) to be coated is to be placed, wherein the first continuous structure (13) and the second continuous structure (14) are provided in the first chamber member (71),
the work (W) to be coated is placed in the second chamber member (72), and
the displacement means (9) displaces the first continuous structure (13) and the second continuous structure (14), and the work (W) to be coated by raising/lowering the first chamber member (71) and the second chamber member (72) relative to each other,.

11. The coating apparatus (4) according to claim 10, further comprising:
an air pressure adjustment means (8) for adjusting, in the coating space, air pressure between a sealed space that is surrounded by the film (F) and a jig (G) on which the work (W) to be coated is placed and an outer space that is outside of the sealed space.

12. The coating apparatus (4) according to claim 11,
wherein the jig (G) further comprises:
a first protruding portion (G1) arranged to extend along the first side, and a first contact portion (G2) that is on a side of the first protruding portion (G1) that is opposite to a placement surface side with the work (W) to be coated and is lower in height than the first protruding portion (G1); and
a second protruding portion (G3) arranged to extend along the second side, and a second contact portion (G4) that is on a side of the second protruding portion (G3) that is opposite to a placement surface side with the work (W) to be coated and is lower in height than the second protruding portion (G3),
wherein the plurality of first contact members (11) come into contact with the first contact portion (G2) via the film (F), and the plurality of second contact members (12) come into contact with the second contact portion (G4) via the film (F).

13. The coating apparatus (4) according to any one of claims 1 to 12, further comprising:
a heating means (21) for heating the film (F) conveyed above the work (W) to be coated.

14. The coating apparatus (4) according to claim 13,
wherein the heating means (21) further comprises:
a heater (210) provided for a respective first contact member (71); and
a connecting member (22a) configured to connect the heater (210) and a corresponding first contact member (11).

15. The coating apparatus (4) according to claim 13,
wherein the plurality of first contact members (11) and the plurality of second contact members (12) are arranged at positions opposite to each other, and
further comprises: a bridge member (25) configured to connect a respective first contact member (11) and a respective second contact member (12),
wherein the heating means (21) is provided for each combination of a respective first contact member (11) and a respective second contact member (12) and is provided on a respective bridge member (25).

16. The coating apparatus (4) according to any one of claims 1 to 12, further comprising:
a heating means (25) for heating the film (F) conveyed above the work (W) to be coated; and
a second displacement means (28) arranged independently of the displacement means (9) and for displacing the heating means (21) relative to the work (W) to be coated.

17. The coating apparatus (4) according to any one of claims 1 to 6, 9 to 13, and 16, further comprising:
a moving means (29) for moving at least one continuous structure so as to change a distance of separation between the first continuous structure (13) and the second continuous structure (14).
